# EUROPÄISCHE PATENTANMELDUNG

(11) **EP 0 860 935 A1**
(43) Veröffentlichungstag der Anmeldung: **26.08.1998**
(21) Anmeldenummer: 98102360.9
(22) Anmeldetag: 11.02.1998
(51) Int. Cl.: H02K 57/00

(54) **Gerät zur Kopplung von elektrischen und magnetischen Feldern**

(30) Priorität: 12.02.1997 DE 29702380 U; 29.11.1997 DE 19751317
(71) Anmelder: Wolf, Elmar, 12679 Berlin (DE); Schulze, Dieter, 37269 Eschwege (DE)
(72) Erfinder: Wolf, Elmar, 12679 Berlin (DE); Schulze, Dieter, 37269 Eschwege (DE)
(74) Vertreter: Gulde, Klaus W., Dipl.-Chem.

(57) **Zusammenfassung**

Ein Gerät zur Kopplung von elektrischen und magnetischen Energiefeldern soll technisch-ökonomisch wenig aufwendig geschaffen werden, das die Verwendungseigenschaften fester, flüssiger und gasförmiger Stoffe und die Eigenschaften biolgischer Systeme verbessert, wie
den Wirkungsgrad bei der Energieerzeugung, die Härtegrade bei Stahl bei gleicher Materialzusammensetzung erhöht, die Ölviskosität erhöht, Pflanzen, Tiere und Menschen bioenergetisch, z.B. zur Stärkung des Immunsystems, auflädt, den Wirkungsgrad von elektomagnetischen Übertragern, z.B. Trafos, erhöht, Informationen auf Stoffe und biologische Systeme mittels aufmodulierter Schwingungen mit gleichbleibender oder sich zeitlich ändernden Frequenz überträgt und die Wachstumsbedingungen von im Wasser vorhandenen gesundheitsgefährdenden Keimen zerstört.

Hierzu wird das magnetische Feld durch Permanentmagnete oder Elektromagnete mit beliebiger Wickelart und beliebiger Anzahl der Magnetfeldspulen und das elektrische Feld mindestens durch zwei Elektroden erzeugt, wobei die Felder so zueinander verkoppelt werden, daß die Feldlinien beider Felder sich im Winkelbereich von 0° bis 90° überlagern und der Phasenwinkel zwischen beiden Feldern Null ist und im Ausbreitungsbereich der beiden Felder sich zeitweilig ein festes oder flüssiges oder gasförmiges Medium bzw. biologisches System befindet bzw. hindurchbewegt.

## Beschreibung

Die Erfindung betrifft ein Gerät zur Kopplung von elektrischen und magnetischen Energiefeldern, das die Verwendungseigenschaften fester, flüssiger und gasförmiger Stoffe und die Eigenschaften biologischer Systeme verbessert.

Es sind Geräte bekannt, die an Wasserleitungen angebracht sind und das Wasser derart aufbereiten, daß Kalk- und Korrosionsablagerungen verhindert werden. Sie erzeugen mittels Permanent- bzw. Elektromagneten magnetische Felder, durch welche das Wasser fließt.
Bekannt sind auch Geräte, bei denen das Wasser durch ein elektrisches Feld fließt. Diese Geräte bewirken eine Verwandlung der Kalkkristalle in eine feinkristalline Form. Dadurch verlieren sie die Eigenschaft, sich zusammen-zuballen bzw. anzuhaften.
Alle diese Geräte haben den Nachteil, daß sie bei Wasser mit hohen Härtegraden nur teilweise Kalkablagerungen verhindern bzw. wenn eine einwandfreie Funktion gewährleistet werden soll, einen hohen technischökonomischen Aufwand erfordern.
Bekannt sind auch Geräte, die den im Wasser enthaltenen Kalk chemisch binden. Ihr technisch-ökonomischer Aufwand zur Herstellung und zum Betrieb ist ebenfalls recht hoch.

Nach der europäischen Patentschrift 0 389 888 ist eine Anordnung zur Verminderung des Kraftstoffverbrauches und der Abgase bei Brennkraftmaschinen, sowie ein Verfahren zur Kraftstoffreduzierung und Abgasminderung bei Brennkraftmaschinen bekannt. Bei dieser Anordnung ist in der Kraftstoffzuführung zur Verbrennungskammer ein Aktivator mit einer vom Kraftstoff durchströmten Kammer angeordnet, wobei in diesen Kammern mindestens eine weitere, mit einem aktivierten Medium gefüllte Kammer vorhanden ist, bei welchen Medium vorher, also vor Einbringen in die Kammer, die elektromagnetische Struktur durch Änderung der magnetischen Kernresonanzeigenschaften und durch Ausbildung von supermolekularen Komplexen zwischen den Molekülen der Schwingungszustand geändert ist und daß das aktivierte Medium mit seinem elektromagnetischen Feld auf den Kraftstoff einwirkt. Das Verfahren ist dadurch gekennzeichnet, daß der Kraftstoff an einer Kammer vorbeigeführt wird, die mit einer Flüssigkeit geänderter elektromagnetischer Struktur gefüllt ist und das elektromagnetische Feld dieser Flüssigkeit auf den Kraftstoff einwirken gelassen wird. Nachteilig an dieser Lösung ist, daß die Flüssigkeit, deren magnetische Struktur verändert wurde, diesen Status (energetischen Zustand) nach und nach wieder verliert, so daß in bestimmten Zeitabständen diese Flüssigkeit gegen neu energetisierte Flüssigkeit ausgetauscht werden muß.

Der Erfindung liegt die Aufgabe zu Grunde, ein technischökonomisch wenig aufwendiges Gerät zu schaffen, das die Verwendungseigenschaften fester, flüssiger und gasförmiger Stoffe und die Eigenschaften biolgischer Systeme verbessert, wie
den Wirkungsgrad bei der Energieerzeugung, die Härtegrade bei Stahl bei gleicher Materialzusammensetzung erhöht, die Ölvizkosität erhöht, Pflanzen, Tiere und Menschen bioenergetisch, z.B. zur Stärkung des Immunsystems, auflädt, den Wirkungsgrad von elektomagnetischen Übertragern, z.B. Trafos, erhöht, Informationen auf Stoffe und biologische Systeme mittels aufmodulierter Schwingungen mit gleichbleibender oder sich zeitlich ändernden Frequenz überträgt und die Wachstumsbedingungen von im Wasser vorhandenen gesundheitsgefährdenden Keimen zerstört.

Erfindungsgemäß wird das durch die Merkmale des Patentanspruches 1 erreicht. Weitere datallierte Ausgestaltungen der Erfindung sind in den Ansprüchen 2 bis 13 beschrieben.

Es liegt auch im Rahmen der Erfindung, daß anstelle des in den Ansprüchen angegebenen elektrischen bzw. magnetischen Feldes jeweils mehrere elektrische bzw. magnetische Felder einsetzbar sind.

Der Vorteil der Lösung besteht darin, daß ein Gerät geschaffen wurde, das bei geringem Energieeintrag eine enorme Verbesserung der Verwendungseigenschaften von gasförmigen, flüssigen und festen Medien bewirkt, das kostengünstig in Relation zum erreichten Ergebnis (Nutzen) hergestellt werden kann und ohne jegliche Nachladung bzw. Regenerierung eine gleichbleibende Wirkung behält.

Die Erfindung wird nachstehend an Ausführungsbeispielen näher erläutert. Die zugehörigen Zeichnungen zeigen:
- Fig. 1:: Anordnung, bei der das Medium von einer Innenelektrode und von Magnetfeldspulen umgeben ist.
- Fig. 2:: Anordnung, die mittig eine Zentralelektrode aufweist und die Magnetfeldwicklungen um das Medium angeordnet sind.
- Fig. 3:: Anordnung, bei der eine Innenelektrode von spiralförmig gewickelten Mediumbehälter umgeben ist, welches am Umfang durch eine Außenelektrode umgeben ist.
- Fig. 4:: Anordnung, bei der das Medium von einer Innen- und Außenelektrode umgeben ist, wobei die Magnetfeldspulen vertikal getrennt angeordnet sind.

Für alle Ausführungsbeispiele gilt, daß die flüssigen, gasförmigen und festen fließfähigen (z.B. kugelförmigen) Medien oder fließfähigen biologischen Systeme in Rohren 1 oder rohrähnlichen Behältnissen durch die magnetischen und elektrischen Felder transportiert werden bzw. in den Feldern zeitweilig verweilen.
Die anderen festen Medien oder biologischen Systeme werden in ihrer äußeren Form durch die magnetischen und elektrischen Felder transportiert bzw. verweilen zeitweilig in den Feldern.

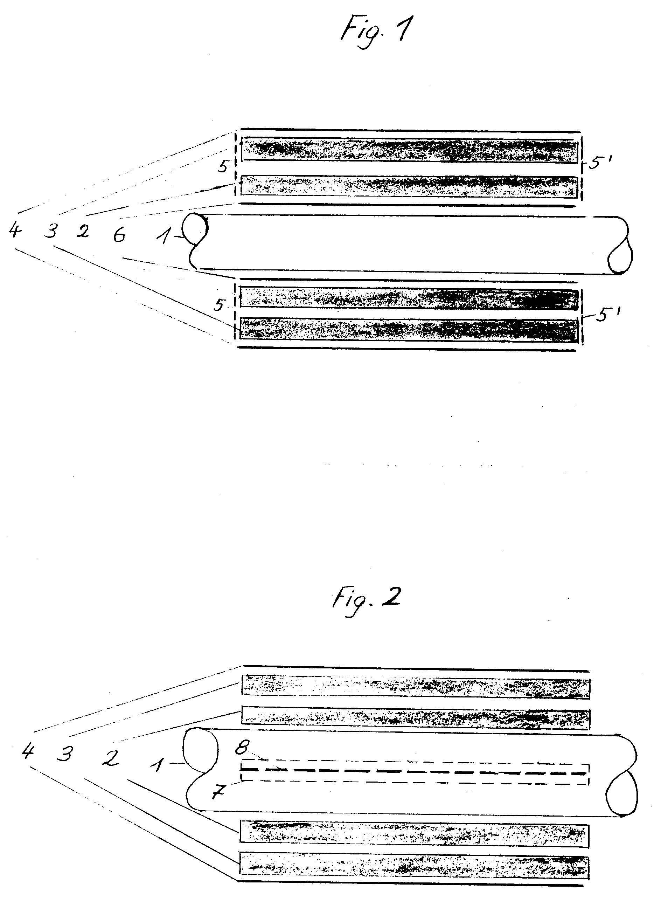

Im Ausführungsbeispiel nach Figur 1 ist das Rohr 1 oder der feste Körper nach vorheriger Darstellung von einer Innenelektrode 6 umgeben. Die Innenelektrode 6 kann aus Draht oder Metallfolie gebildet sein. Um diese Innenelektrode 6 sind quasi ringförmig zwei voneinander getrennte Magnetfeldspulen 2 und 3 angeordnet, die radial oder longitudinal gewickelt sind. Allgemein gültig dabei ist, daß eine oder mehrere Magnetfeldspulen 2,3 angeordnet sein können. Um diese Magnetfeldspulen 2,3 ist die Außenelektrode 4 angeordnet. Zur Inbetriebnahme des Gerätes wird zwischen die Innenelektrode 6 und die Außenelektrode 4 eine elektrische Spannung angelegt. Die Spannungsgröße ist abhängig vom jeweiligen Einsatzzweck und der dadurch bedingten Geometrie (Abstand zwischen den Elektroden - Innen- und Außenelektrode) des Gerätes.
Durch diese Spannung entsteht ein elektrisches Feld, das das Magnetfeld oder die Magnetfelder durchdringt. Die elektrischen und magnetischen Felder können Gleichfelder, Wechselfelder oder auch kombinierte Gleich- und Wechselfelder sein. Der Phasenwinkel zwischen Strom und Spannung ist dabei immer Null.
Nach Anlegen der elektrischen Spannung wird das Medium durch die elektrischen und magnetischen Felder bewegt. Die Transportgeschwindigkeit ist abhängig von der Stärke der elektrischen und magnetischen Felder und der Art und Qualität der zu verändernden Gebrauchseigenschaft des Mediums.
Durch den Einfluß der elektrischen und magnetischen Felder verändern sich die Eigenschaften den Mediums infolge des gegenseitigen Durchdringens des elektrischen und magnetischen Feldes, wodurch ein Produktfeld einer neuen Qualität entsteht, deren Fortpflanzungsrichtung dem Poyntingvektor entspricht. Die Schwingungsform ist longitudinal.

Das Produktfeld (E x H), welches in weiten grenzen variierbar ist, durchdringt alle gasförmigen, flüssigen und festen Stoffe bzw. biologischen Systeme und lädt diese dabei energetisch auf. Dieser Energiezustand bleibt längere Zeit, d.h. bis zu Monaten, nach dem Abschalten von Spannung und Strom (für das elektrische und magnetische Feld) erhalten. Durch auf das elektrische oder magnetische bzw. beide Felder aufmodulierte Schwingungen mit gleichbleibender oder sich zeitlich ändernder Frequenz können ganz bestimmte Verwendungseigenschaften der zu behandelnden Stoffe hervorgehoben qualifiziert werden.

Diese Ausführungsform kann auch alternativ mit Seitenelektroden 5, 5' anstelle der Außenelektroden 4 und Innenelektroden 6 ausgerüstet werden, an die die Spannung angelegt wird. Das entstehende elektrische Feld durchdringt das Magnetfeld um 90^{o} gedreht gegenüber der erstgenannten Anordnung. Die Anordnung der Seitenelektroden 5, 5' bringen eine höhere Produktfelddichte, da Magnetfeld und elektrisches Feld dichter werden, je kürzer die Magnetfeldspule ausgeführt wird und sich dadurch der Abstand der Seitenelektroden 5, 5' verringert.

In dem Ausführungsbeispiel nach Figur 2 ist mittig eine Zentralelektrode 8 angeordnet, die für leitende Medien isoliert bzw. mit einem Isolierkörper 7 umgeben ist. Für fließfähige, flüssige und gasförmige Medien ist die Zentralelektrode 8 mit einem Rohr 1 umgeben. Der weitere Aufbau und die Wirkungsweise entsprechen dem ersten Ausführungsbeispiel.

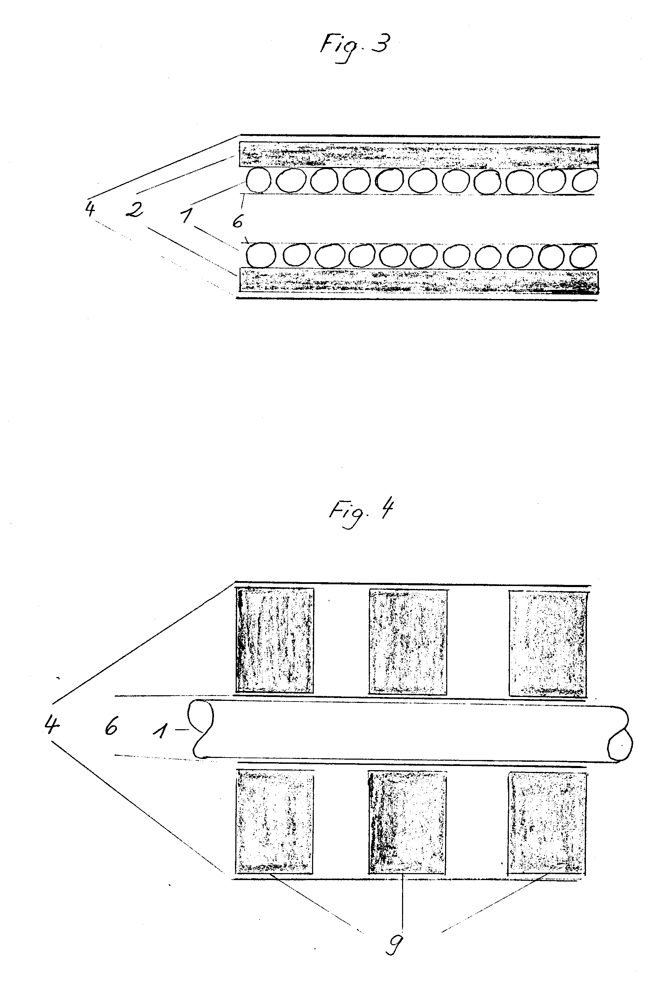

Nach Figur 3 ist das Ausführungsbeispiel gegenüber den vorherigen Lösungen in der Weise modifiziert, daß das Medium durch ein spiralförmiges Rohr 1 oder ein doppelwandiges Rohr transportiert wird. Die Innenelektrode 6 ist vorteilhafterweise rohrförmig ausgebildet.

In dem Ausführungsbeispiel nach Figur 4 ist mittig ein Rohr 1 oder das feste Medium angeordnet. Um das Rohr 1 sind eine Innenelektrode 6, eine bzw. mehrere Magnetfeldspulen 9 und darüber eine Außenelektrode 4 angeordnet. Auf die Magnetfeldspulen 9 oder auf die Innenelektrode 6 und die Außenelektrode 4 wird das Potential des elektrischen Feldes gelegt.

Für alle Lösungen gilt, daß die Permanent- bzw. Elektromagnete und die einhüllenden Elektroden in beliebiger geometrischer Form, wie rund, eckig und flächenhaft, ausbildbar sind.

## Patentansprüche

1. Gerät zur Kopplung Von elektrischen und magnetischen Energiefeldern, dadurch gekennzeichnet,
daß das magnetische Feld durch Permanentmagnete oder Elektromagnete mit beliebiger Wickelart und beliebiger Anzahl der Magnetfeldspulen (2, 3, 9) erzeugt wird und das elektrische Feld mindestens durch zwei Elektroden (4, 5, 5', 6 , 8) erzeugt wird, wobei die Felder so zueinander verkoppelt werden, daß die Feldlinien beider Felder sich im Winkelbereich von 0° bis 90° überlagern und der Phasenwinkel zwischen beiden Feldern Null ist und im Ausbreitungsbereich der beiden Felder sich zeitweilig ein festes oder flüssiges oder gasförmiges Medium bzw. biologisches System befindet bzw. hindurchbewegt.

2. Einrichtung nach Anspruch 1, dadurch gekennzeichnet,
daß das magnetische und das elektrische Feld Gleichfelder sind.

3. Einrichtung nach Anspruch 1, dadurch gekennzeichnet,
daß das magnetische Feld ein Wechselfeld und das elektrische Feld ein Gleichfeld ist.

4. Einrichtung nach Anspruch 1, dadurch gekennzeichnet,
daß das magnetische Feld ein Gleichfeld und das elektrische Feld ein Wechselfeld ist.

5. Einrichtung nach Anspruch 1, dadurch gekennzeichet,
daß das magnetische Feld und das elektrische Feld ein Wechselfeld ist.

6. Einrichtung nach den Ansprüchen 1 bis 5, dadurch gekennzeichnet,
daß ein ringförmiger Permanent- oder Elektromagnet, gebildet z.B. durch Magnetfeldspulen (2, 3), von mindestens zwei Elektroden (4, 6 oder 5, 5') eingeschlossen wird und das Medium im Ringinneren angeordnet ist.

7. Einrichtung nach den Ansprüchen 1 bis 5, dadurch gekennzeichnet,
daß ein ringförmiger Permanent- oder Elektomagnet, z.B. durch Magnetfeldspulen (2, 3) gebildet, außen von einer Außenelektrode (4) umschlossen und im Ringzentrum (Kern) eine Zentralelektrode (8) angeordnet ist, wobei das Medium im Ringinneren um die Zentralelektrode (8) sich bewegt bzw. angeordnet ist.

8. Einrichtung nach Anspruch 1 und 7, dadurch gekennzeichnet, daß die Zentralelektrode (8) stab- oder rohrförmig ausgebildet ist.

9. Einrichtung nach den Ansprüchen 1, 7 und 8, dadurch gekennzeichnet,
daß die Zentralelektrode (8) von einem Isolierkörper (7) umgeben ist.

10. Einrichtung nach Anspruch 1 und 6, dadurch gekennzeichnet, daß der Permanent- oder Elektromagnet aus mindestens zwei nebeneinander, in Abständen zueinander angeordneten Einzelmagneten bzw. Magnetfeldspulen (9) besteht.

11. Einrichtung nach einem oder mehreren der vorangehenden Ansprüche, dadurch gekennzeichnet,
daß der jeweilige Permanent- oder Elektromagnet gleichzeitig als eine Elektrode zur Erzeugung des elektrischen Feldes nutzbar ist.

12. Einrichtung nach Anspruch 1, dadurch gekennzeichnet,
daß den verkoppelten elektrischen und magnetischen Feldern Wechselspannungen gleicher und sich zeitlich ändernder Frequenzen aufmoduliert werden, um dem zu behandelnden Medium verbesserte und/oder bestimmte Verwendungseigenschaften hervorgehoben zu verleihen.

13. Einrichtung nach einem oder mehreren der vorangehenden Ansprüche, dadurch gekennzeichnet,
daß die Permanent- bzw. Elektromagnete und die einhüllenden Elektroden in beliebiger geometrischer Form, wie rund, eckig und flächenhaft, ausbildbar sind.
